(19) Europäisches Patentamt / European Patent Office / Office européen des brevets

(11) **EP 2 561 514 B1**

(12) **EUROPEAN PATENT SPECIFICATION**

(45) Date of publication and mention
of the grant of the patent:
**23.04.2014 Bulletin 2014/17**

(51) Int Cl.:
***G21C 1/30*** (2006.01)     ***G21C 7/34*** (2006.01)
***G21C 17/104*** (2006.01)     ***G21D 3/10*** (2006.01)
***G21C 1/03*** (2006.01)

(21) Application number: **10711397.9**

(22) Date of filing: **29.03.2010**

(86) International application number:
**PCT/EP2010/054132**

(87) International publication number:
**WO 2011/120555 (06.10.2011 Gazette 2011/40)**

(54) **ACCELERATOR-DRIVEN NUCLEAR SYSTEM WITH CONTROL OF EFFECTIVE NEUTRON MULTIPLICATION COEFFICENT**

DURCH BESCHLEUNIGER ANGETRIEBENES NUKLEARSYSTEM MIT STEUERUNG DES EFFEKTIVEN NEUTRONENVERVIELFACHUNGSKOEFFIZIENTEN

SYSTÈME NUCLÉAIRE ENTRAÎNÉ PAR ACCÉLÉRATEUR AVEC COMMANDE DE COEFFICIENT DE MULTIPLICATION DE NEUTRON EFFICACE

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(43) Date of publication of application:
**27.02.2013 Bulletin 2013/09**

(73) Proprietor: **JACOBS U.K. LIMITED**
**Winnersh**
**Wokingham**
**Berkshire RG41 5TU (GB)**

(72) Inventor: **RUBBIA, Carlo**
**CH-1208 Geneva (CH)**

(74) Representative: **Cabinet Plasseraud**
**52, rue de la Victoire**
**75440 Paris Cedex 09 (FR)**

(56) References cited:
**FR-A1- 2 829 281**     **US-A1- 2006 215 799**
**US-A1- 2007 064 859**

• **C. RUBBIA: "Sub-Critical Thorium Reactors", Symposium "Energy 2050", Stockholm, Sweden, 19-20.10.2009 , 20 October 2009 (2009-10-20), XP002606725, Retrieved from the Internet: URL: http://energy2050.se/uploads/files/rub bia2.pdf [retrieved on 2010-10-22]**
• **BAETEN P ET AL: "Reactivity monitoring in ADS, application to the MYRRHA ADS project", PROGRESS IN NUCLEAR ENERGY, PERGAMON PRESS, OXFORD, GB LNKD- DOI: 10.1016/S0149-1970(03)00054-4, vol. 43, no. 1-4, 1 January 2003 (2003-01-01), pages 413-419, XP022595288, ISSN: 0149-1970 [retrieved on 2003-01-01]**
• **OECD: "CHAPTER 4: Accelerator-Driven System (ADS) and Fast Reactor (FR) Technologies", INTERNET CITATION, 1 January 2002 (2002-01-01), pages 117-166, XP007915468, Retrieved from the Internet: URL: www.nea.fr/ndd/reports/2002/nea3109-ad s.pdf [retrieved on 2010-10-25]**
• **PERSSON C-M ET AL: "Analysis of reactivity determination methods in the subcritical experiment Yalina", NUCLEAR INSTRUMENTS & METHODS IN PHYSICS RESEARCH. SECTION A: ACCELERATORS, SPECTROMETERS, DETECTORS, AND ASSOCIATED EQUIPMENT, ELSEVIER BV * NORTH-HOLLAND, NETHERLANDS, vol. 554, no. 1-3, 1 December 2005 (2005-12-01), pages 374-383, XP027783181, ISSN: 0168-9002 [retrieved on 2005-12-01]**

**Description**

BACKGROUND OF THE INVENTION

The present invention relates to accelerator-driven systems (ADS).

In the recent years, considerable interest has grown worldwide for accelerator-driven subcritical reactors for instance for Trans Uranic (TRU) burners and for a Thorium based breeder, the Energy Amplifier (EA) as disclosed in WO 95/12203.

In a subcritical system, the neutron multiplication is less than one and the additional neutrons which are produced by an external proton accelerator can be used in particular to ensure the operation of the breeding reaction chain. Subcriticality appears particularly advantageous in applications where there is a contribution of the effective delayed neutrons much smaller than in an ordinary pressurized water reactor (PWR), a small or adverse Doppler temperature coefficient and possibly also a positive void coefficient depending on the conditions of the coolant. The subcritical operation is in particular helpful in the case of a fast breeder based on U-238 or a thermal or fast breeder based on Th-232, since two neutrons rather than one are hereby necessary to close the process, one to produce the fissile material and the second to fission the daughter element, only slightly less than the neutron multiplicity due to fission.

As well known, in a subcritical system the neutron multiplication coefficient k is the average probability that a given neutron of the core may continue the chain reaction. The resulting total average number of secondary neutrons produced by the cascade starting from each incoming external accelerator-driven neutron is then given by $k + k^2 + k^3 + ... = k/(1 - k) = -1/\rho$, where p is the so-called excess reactivity. In a subcritical system, we have p<0.

Two components contribute to the neutron multiplication of a subcritical system, namely the instantaneous contribution kp due to prompt fission neutrons and the contribution $k_d$ due to the delayed neutrons generated by a tiny fraction $\beta_{eff}$ of the fission fragments which generate neutrons several seconds after the occurrence of an initial fission, with $k = kp + k_d$. During their time of delay, these neutrons are not present as free neutrons: they are "prestored" in a nucleus (such as Kr-87), and during such a short period they are not subject to any appreciable moderation or absorption. The phenomenon of storage of these neutrons increases the effective response time.

Table 1 shows the 6 decay families of delayed neutron-emitting fission fragments from U-233, U-235 and Pu-239 fissile Actinides. The exponential lifetime for neutron emission and the fractional fission rate are given for each family, for both fast (unmoderated) neutrons ($\beta_{fast}$) and thermal neutrons ($\beta_{ther}$). They are widely different for each of the initial actinide states.

Table 1. Exponential families of delayed neutrons for different fission nuclei.

| Element | Group no. | Fast lifetime $(1/\lambda_i)$, sec | Fast relative yield $\beta_i/\beta$ | Thermal lifetime $(1/\lambda_i)$, sec | Thermal relative yield $\beta_i/\beta$ |
|---|---|---|---|---|---|
| 233-U | | | | | |
| | 1 | 80.00 | 0.096 | 79.37 | 0.086 |
| | 2 | 27.78 | 0.208 | 29.67 | 0.299 |
| | 3 | 7.25 | 0.242 | 7.19 | 0.252 |
| | 4 | 3.14 | 0.327 | 3.08 | 0.278 |
| | 5 | 0.82 | 0.087 | 0.88 | 0.051 |
| | 6 | 0.32 | 0.041 | 0.40 | 0.034 |
| | sum | | $\beta_{fast}$=0.0026 | | $\beta_{ther}$=0.0026 |
| 235-U | | | | | |
| | 1 | 78.74 | 0.038 | 80.65 | 0.0330 |
| | 2 | 31.55 | 0.213 | 32.79 | 0.2190 |
| | 3 | 8.70 | 0.188 | 9.01 | 0.1960 |
| | 4 | 3.22 | 0.407 | 3.32 | 0.3950 |
| | 5 | 0.71 | 0.128 | 0.88 | 0.1150 |
| | 6 | 0.26 | 0.026 | 0.33 | 0.0420 |
| | sum | | $\beta_{fast}$=0.0064 | | $\beta_{ther}$=0.0067 |
| 239-Pu | | | | | |
| | 1 | 77.52 | 0.038 | 78.13 | 0.035 |
| | 2 | 32.15 | 0.280 | 33.22 | 0.298 |
| | 3 | 7.46 | 0.216 | 8.06 | 0.211 |

(continued)

| Element | Group no. | Fast lifetime $(1/\lambda_i)$, sec | Fast relative yield $\beta_i/\beta$ | Thermal lifetime $(1/\lambda_i)$, sec | Thermal relative yield $\beta_i/\beta$ |
|---|---|---|---|---|---|
| | 4 | 3.02 | 0.328 | 3.08 | 0.326 |
| | 5 | 0.79 | 0.103 | 0.89 | 0.086 |
| | 6 | 0.31 | 0.035 | 0.37 | 0.044 |
| | sum | | $\beta_{fast}=0.0020$ | | $\beta_{ther}=0.0022$ |

As shown in Table 1 in the case of the fissionable elements U-233, Pu-239 and U-235, the period of the characteristic families of delayed neutrons range from about one second to about one minute depending on the composition of the fissile Actinides. Of course, irrespectively of the source, both beam-driven external neutrons and delayed neutrons undergo subsequent neutron multiplication.

Various units of reactivity are of common use, amongst them the "dollar" ($). The dollar is defined as the variation $\Delta k$ of the neutron multiplication coefficient k which is just equal to the contribution of delayed neutrons, namely $\Delta k = \beta_{eff}$, with the "cent" being the hundredth part of a dollar. Actual values are 1 \$ = 2.1 $\times$ 10$^{-3}$ for U-233, 1 \$ = 2.9 $\times$ 10$^{-3}$ for Pu-239 and 1 \$ = 7.3 $\times$ 10$^{-3}$ for U-235.

As can be seen, each isotope contributes a differing number of delayed neutrons to any practical fuel mixture. It is therefore helpful to define a value of $\beta_{eff}$ for the reactor system:

$$\beta_{eff} = \sum_{i=1}^{n} P_{eff}(i) \times \beta_{eff}(i)$$

where: $P_{eff}(i)$ is the fractional contribution to total fission of isotope (i) in a mixture of n isotopes present in the reactor. It is noted that $P_{eff}(i)$ varies with time due to reactor operation and radioactive decay;

$\beta_{eff}(i)$ is the contribution of delayed neutrons for isotope (i).

The theory of subcritical systems for nuclear fuels has been extensively discussed since the fifties. More recently, with the advent of the Energy Amplifier and ADS concepts, a number of nearly zero power subcritical arrangements have been extensively studied experimentally, amongst which the experiments FEAT at CERN (Switzerland), MASURCA in Cadarache (France) and YALINA in Minsk (Belarus).

In these experiments, a number of methods to identify the reactivity-related parameters have been described in detail. These methods have been generally based on the use of a narrowly pulsed, low-power beam source (for instance of Dirac-like shape). They are involving extremely small amounts of fission power and no appreciable temperature variations. They are adequate for calibration purposes and reactivity estimates. But these studies are not entirely adequate to define a practical reactivity monitoring and the necessary feedback control procedures for the operation of a commercial, high-power accelerator-driven system where instead the beam power is large and continuous, i.e. the analogue of the regulation methods of an ordinary critical reactor.

Unlike the above-mentioned nearly zero-power subcritical arrangements, in commercially oriented larger power generating plants (either critical or subcritical), temperature variations play a fundamental role. In a high-power system the most relevant reactivity feedback mechanism is the Doppler effect, which depends on the instantaneous temperature distribution of the fuel of the core. When materials heat up, resonances in the reaction cross sections get wider, thus changing the probability for the reactions to occur and therefore altering the neutron multiplication coefficient k. The relevant parameter is the so-called temperature coefficient, defined as $\Delta k_T = dk/dT$ (in units of K$^{-1}$), where T is the absolute temperature of each fuel element. The actual value of $\langle \Delta k_T \rangle = \langle dk / dT \rangle$, suitably averaged over the reactor volume, is strongly dependent on the nature of the elements that constitute of the core. Its value may be either positive or negative depending on the composition and the geometry of the fuel and of the coolant materials.

Temperature variations are also affecting the behaviour of the coolant and of the whole geometrical structure of the core. When the temperature increases, there is decrease of the coolant density p(T), with correspondingly fewer neutrons captured and a geometrical expansion in the lattice geometry. The neutron spectrum and therefore the neutron multiplication coefficient k is correspondingly modified by the so-called void coefficient dk/(dp/p), which introduces changes summed to the temperature coefficient dk/dT, and by changes of the "buckling" due to geometrical expansion.

In an ordinary critical reactor, the timely change (not its actual value) of the produced power is controllable by adjusting the neutron multiplication coefficient k as a function of time. The reactor is then operated in a self-generating power critical mode with k $\approx$ 1. The operator determines directly the direction and the rate of motion of the control rods, that is, effectively, the second derivative of the power level. The instantaneous k excess above 1 must never exceed 1 $ since a critical reactor is controllable only within the extent of the contribution of the delayed neutrons, where the rate of power change remains acceptably slow. In these conditions, the rate of change is determined by the presence of the delayed neutrons in order to allow enough time to adjust mechanically with control rods the self produced power. For instance, in a standard PWR, a criticality constant of 1/1000 above k = 1 would increase the neutron population by about 0.9 percent per second, leaving ample time to correct the criticality factor with the help of control bars before an undue increase in the reaction rate takes place. If (k-1) exceeds the entire contribution due to delayed neutrons, the reactor becomes "prompt" critical, with the most dramatic consequences. The lifetime of a neutron will be typically of the order of a few µsec, and for a criticality factor exceeding the prompt value by as little as 1/1000, the multiplication rate will increase by a factor $(1.001)^{1000} \approx 2 \times 10^4$ at each second

In a subcritical reactor, the fission power is driven directly by the proton beam current. This corresponds to a precise proportionality between the thermal fission produced power $P_{therm}$ and the external accelerator beam power $P_{beam} = i_{beam} \times T_p / e$, $i_{beam}$ being the proton current in Ampere, e being the proton elementary charge and Tp being the kinetic energy in eV. The multiplying factor between $P_{therm}$ and $P_{beam}$ is k/(1-k) as generated by the nuclear cascade.

The development of modern accelerators has permitted the production of a substantial neutron flux with the help of a proton-driven high-energy spallation source. The spallation in a heavy Z target, like for instance molten Lead, may produce as many as 30 neutrons/proton for a beam made of protons having a kinetic energy of 1 GeV. Accelerators in this energy domain, for instance either cyclotrons or superconducting linear accelerators (LINAC), may produce a beam power $P_{beam}$ that is as much as 50% of its required primary electricity supply, thus requiring from the accelerator only a modest fraction of the electricity which is generated by the reactor.

In previous subcritical projects, the value of the criticality k has been chosen far enough from unity, typically k $\approx$ 0.97 or even smaller, but sufficient to ensure that an adequate subcriticality margin is guaranteed a *priori* even under the most exceptional adverse conditions. A "scram" mechanism is needed only in the case of an emergency shutdown and when the reactor is kept off for a very extended period of time.

In these conditions (k $\approx$ 0.97), a subcritical EA traditionally operated at a thermal power of 1.5 GWatt requires for instance a current $i_{beam}$ of about 24 mA for a proton beam of 1 GeV kinetic energy on a Lead spallation target. This represents a substantial technology advance both for the accelerator itself and for the spallation target.

At the 'Energy 2050' Symposium in Stockholm, Sweden, October 19-20, 2009, C. Rubbia mentioned a $k_{eff}$ value of 0.997 in a presentation entitled "Sub-Critical Thorium Reactors". US 2007/064859 A1 discloses a subcritical nuclear system in which the energy of the accelerated particles is adjusted to operate the system at a preselected operating point. In "Reactivity Monitoring in ADS, Application to the Myrrha ADS Project", Progress in Nuclear Energy , Vol. 43, No. 1-4, Pages 413-419, 2003, P. Baeten, et al. discuss different reactivity monitoring techniques in ADS's operated at reactivity levels below -4$. One of them uses a so-called prompt jump reactivity indicator. A similar technique is referred to as the "source jerk" method in "Analysis of reactivity determination methods in the subcritical experiment Yalina" by C.M. Persson, et al., Nuclear Instruments and Methods in Physics Research A 554 (2005), pages 374-383.

It is an object of this invention to propose an alternative mode of operation which makes it possible to effectively control the reactor in a high power mode (suitable for commercial energy production plants), without the requirement for a very large accelerator.

SUMMARY OF THE INVENTION

It is proposed here to operate in subcritical conditions with a value of the neutron multiplication coefficient k as large as possible in order to require a smaller power from the accelerator, reducing its dimensions and hence its cost and complexity.

A method of operating an ADS in subcritical conditions is disclosed. The method comprises:

- directing accelerated particles onto a spallation target;
- multiplying neutrons from the spallation target in a core loaded with nuclear fuel comprising fissile and fertile material, neutron counters being distributed in the core; and
- controlling reactivity in the core such that an effective neutron multiplication coefficient is maintained in a range above 0.98.

Controlling reactivity in the core comprises:

- applying a step change to reduce the beam current of the accelerated particles;
- measuring a variation of a neutron counting rate provided by the neutron counters in response to the step change of the beam current;
- estimating a drop of the counting rate related to the loss of prompt neutrons due to said step change, wherein estimating the neutron counting rate drop comprises extrapolating the variation of the counting rate after the step change towards the time of the step change; and

- evaluating a ratio of the estimated drop of the counting rate to a value of the counting rate before said step change.

It has been found that operating at such large values of the effective neutron multiplication coefficient $k_{eff}$ (typically one or a few $ below criticality) introduces a completely different phenomenology. Unlike in the traditionally recommended case of $k \approx 0.97$, the amount of beam-generated spallation neutrons becomes comparable to the fraction $\beta_{eff}$ due the number of delayed neutrons. Hence, they both contribute in a comparable way to the multiplying cascade. Any change of the proton current will induce a sizeable modulation in the resulting fission power, with the characteristic time pattern of the delayed neutrons, and allow an accurate on-line estimation of the neutron multiplication coefficient k or reactivity p.

The effective neutron multiplication coefficient $k_{eff}$ can thus be controlled to be compatible with (a) the maximum value of k with which the subcritical reactor may be brought to operate and (b) the largest value of k which can be safely maintained.

For instance, a fast U-233 fission-driven subcritical reactor with $(1-k) = 3.15 \times 10^{-3}$ and a thermal power $P_{therm}$ of 1.5 GWatt can be controlled by a proton beam of 1 GeV kinetic energy with a current $i_{beam} = 2.0$ mA interacting in a molten Lead target, well within the present status of the art of the accelerator technology. The overall power gain of the accelerator at $(1-k) = 3.15 \times 10^{-3}$ is then typically $G = P_{therm}/P_{beam} \approx 750$.

In general, the present method is well suited to commercial energy production applications with a reasonable accelerator beam power, for example in a range of 0.5 to 5 MWatt

In an embodiment, the above-mentioned range for the effective neutron multiplication coefficient is above 0.99 and below 0.999, thus providing very high power gains in the system.

The reactivity in the core is advantageously controlled in a range above -4$, where the reactivity unit '$' is for the reactor system. A preferred control range for the reactivity in dollars between -3$ and -0.5$.

The operation in the very high k-range provides suitable conditions for all the main measurements necessary for the regulating control of the accelerator-driven subcritical core of a commercially oriented larger power generating plant.

In order to a obtain a statistically reliable estimation of the drop of the neutron counting rate even in the presence of temperature variations, the variation of the counting rate is extrapolated from after the step change of the beam current towards the time of said step change. The extrapolated value at the time of the step change gives an indication of the relative level of the delayed neutrons in the steady regime immediately preceding the step change, which is directly related to the reactivity p in dollars. It is noted that the amount of neutrons just after the step change of the beam current can generally not be measured directly because the counters require sufficient counting statistics which cannot be practically achieved because such "semi-stable" level is not maintained long enough due (i) to the decay of the delayed neutrons associated with the lost spallation neutrons which do no cause new fissions any more after the step change and (ii) to the changes in the multiplication coefficient induced by the temperature change inside the core.

In particular, a period following the step change, in which the beam current is kept at the reduced value and the variation of the neutron counting rate is measured for extrapolation, may be more than 100 milliseconds or, preferably, more than 1 second. In order to limit the thermal stress in the core structure, the step change corresponds to a fraction only of the beam current. Typically, the step change reduces the beam current by less than 50%.

In a practical implementation of the method, the accelerated particles directed onto the spallation target are in the form of a continuous particle beam. A pulsed beam is not well suited because a too frequently repeated sudden (in $\mu$s) switching off of the full proton beam even for a relatively short period of time is hardly applicable to any large reactor due to the safety requirements related to an excessive number of repeated thermal shocks of the core structure.

In an accelerator-driven subcritical system, the main controlling element is the variability of the proton current. The variations of the current should have generally an acceptably small rate of change and should be whenever possible of limited amplitude. So the particle beam is preferably operated at a nominal beam current, except in phases of estimating reactivity in the core, and the reactivity control comprises adjusting the position of neutron-absorbing control elements in the core.

The largest value of k which can be maintained is related to the growth in k due to beam variations and it is generally associated with the (negative) temperature coefficients of the core. In particular, the operating value of k should be sufficiently far away from criticality in order ensure that the inevitable sudden loss of the beam due to an accidental failure of the accelerator, the so-called "trip", never exceeds the condition $k = 1$. It is desirable to detect beam "trips" very quickly so that corrective emergency measures can be taken to prevent criticality. The temperature drop of the fuel pins after the occurrence of an exceptional sudden "trip" due to a proton beam loss is relatively fast, with a primary decay time constant of only a few seconds. The sudden occurrence of an unexpected change or loss of the proton current will automatically activate the prompt insertion of fast moving control rods with a reactivity reduction ("scram") such as to bring the reactor well away from potential criticality conditions even before the main change in the temperature of the fuel rods of which the reactor is made has occurred. Thus, an embodiment of the method comprises: detecting any interruption of the accelerated particles; and in response to detection of an interruption, inserting scram neutron absorbers into the core. Preferably, the scram neutron absorbers are inserted into the core after a period of more than 100 milliseconds, preferably more than 1 second, following detection of an interruption of the accelerated particles. A variation of a neutron counting rate provided by neutron counters distributed in the core can be measured in such period. A drop of the counting rate related to the loss of prompt neutrons due to the interruption is then estimated to derive a reactivity value based on a ratio of the estimated drop of the counting rate to a value of the counting rate before the interruption.

In order to maintain stable operating conditions of the core while operating the particle beam at a nominal beam current (except in phases of estimating reactivity in the core), the reactivity control may comprise:

- continuously monitoring a neutron counting rate provided by neutron counters distributed in the core; and

- in response to detection of a deviation condition of the monitored counting rate, performing a phase of estimating reactivity in the core.

This makes it possible to check stability of the operation and to obtain a reactivity estimate (with the related beam reductions causing thermal variations) only when necessary to make sure whether some action to correct the reactivity (such as moving control rods) is needed or not.

Another option, which can be combined with the previous one, is to carry out a reactivity estimation phase periodically. However, the periodicity of such phases should be sufficient (typically more than an hour) to minimize thermal stress to the core.

In addition, the accidental occurrence of a beam "trip" should preferably be very limited (as compared to the ordinary conditions in a conventional proton accelerator), in order to avoid repeated thermal shocks of the structure of the core. This can be prevented by introducing appropriate additions in all the components related to the accelerator. For example, the accelerated particles can be provided by an accelerator complex having redundant components to ensure continuity of the beam current.

In particular, the accelerator complex may have at least one accelerating structure with a plurality of serially-mounted accelerating cavities to apply respective energy gains. If the energy gain of one of the cavities is lost, the lost gain is redistributed between the other cavities using accelerating RF-phase angles. The accelerator complex may also have a plurality of accelerating structures, and in case of failure of one of the accelerating structures, the beam current of at least one other accelerating structure is increased to maintain the overall current of accelerated particles. In an embodiment, two particle beams from the plurality of accelerating structures are merged side-to-side upstream of the spallation target using a magnetic structure and a septum. Those two particle beams may include a first proton beam and a negative ion beam having the same kinetic energy, electrons being stripped from the negative ion beam to provide a second proton beam merged with the first proton beam upstream of the spallation target.

Another aspect of the invention relates to a subcritical accelerator-driven nuclear system, comprising:

- at least one particle accelerator (one in use with possible additional standby redundancy as required);

- a spallation target receiving the accelerated particles;

- a core adjacent to the spallation target, loaded with nuclear fuel comprising fertile material;

- a coolant circuit for recovering heat from the core;

- neutron counters distributed in the core; and

- a control system cooperating with the neutron counters for controlling reactivity such that an effective neutron multiplication coefficient is maintained in a range above 0.98, wherein the control system is arranged for applying a step change to reduce the beam current of the accelerated particles, for measuring a variation of a neutron counting rate provided by the neutron counters in response to the step change of the beam current, for estimating a drop of the counting rate related to.the loss of prompt neutrons due to said step change wherein estimating the drop of the neutron counting rate comprises extrapolating the variation of the counting rate after the step change towards the time of the step change, and for evaluating a ratio of the estimated drop of the counting rate to a value of the counting rate before said step change.

Other features and advantages of the method and system disclosed herein will become apparent from the following description of non-limiting embodiments, with reference to the appended drawings.

BRIEF DESCRIPTION THE DRAWINGS

Figure 1 is a schematic diagram of a subcritical reactor core which can be used to carry out a method in accordance with the invention.

Figure 2 is a diagram representing a typical spallation neutron yield for each incident proton on a thick molten lead target as a function of the proton energy.

Figure 3 shows diagrammatically an example of proton accelerator complex including duplicate standby unit which can be used to implement the invention.

Figure 4 illustrates an alternative example of the accelerator complex.

Figure 5 represents graphically the contribution of surviving delayed neutron rate immediately after a step reduction of the proton current as a function of the number of $ away from delayed criticality.

Figure 6 is a diagram representing different operational conditions as a function of the total neutron multiplication coefficient k, or the number of $, in the case of a breeder reactor based on U-233.

Figure 7 represents graphically the neutron counting rate in arbitrary units (a.u.) as a function of time after a beam "trip" at time t = 0.

Figure 8 represents graphically the neutron counting rate in arbitrary units as a function of time after a 30% step change of the beam current at time t = 0.

DESCRIPTION OF PREFERRED EMBODIMENTS

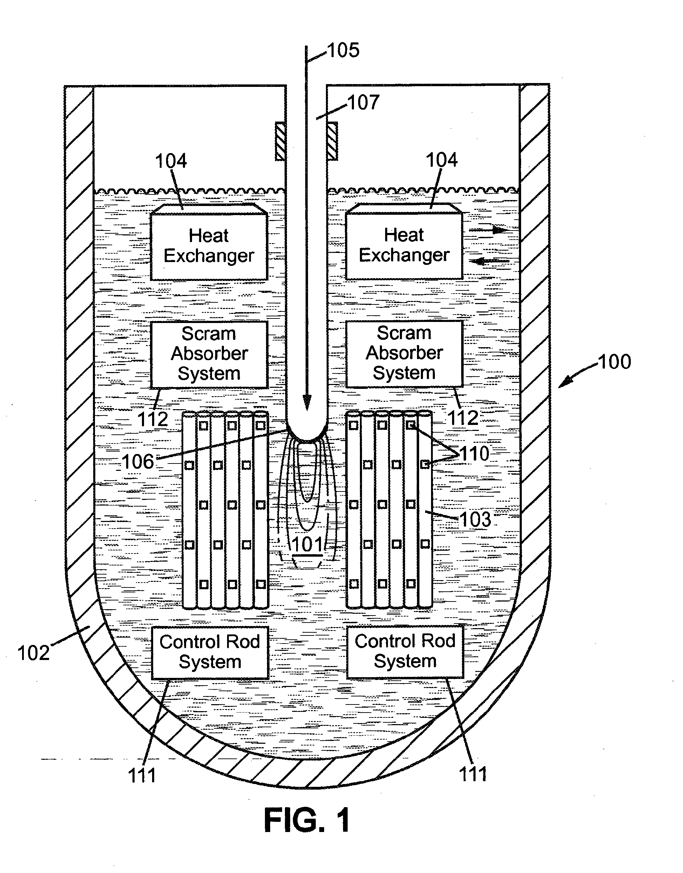

The objects, features and advantages of the invention will now be illustrated in more detail with the aid of the following description of the preferred embodiments. Still further objects and advantages will become apparent from the consideration of the ensuing description and accompanying drawings. All those specific examples are intended for purposes of illustration only and are not to limit the scope of the invention.
In an ADS as illustrated schematically in Figure 1, spallation neutrons are generated in a target 101 located in a central region of a reactor core 100 by directing high energy particles, such as protons having a kinetic energy of the order of 1 GeV, onto heavy nuclei forming the target. Among different materials suitable for spallation targets, Lead is advantageously used because of its high neutron yield when hit by high energy protons. Also Lead in the liquid phase can be used as a coolant to recover thermal power from the core. Other elements including Bismuth have attractive properties to be used as spallation targets.
The exemplary core 100 shown in Figure 1 has an enclosure 102 containing liquid Lead. The central region 101 of the core forming the above-mentioned spallation target is surrounded by fuel assemblies 103. The nuclear fuel contains fertile elements such as Th-232 or U-238 which can breed fissile elements (U-233 or Pu-239) after capturing neutrons. The fissile element can be fissioned by reacting with another neutron. The prompt and delayed neutrons resulting from the fission reaction, along with new spallation neutrons from the target, continue the breeding and fission process. The overall neutron multiplication coefficient k is kept below 1 to avoid criticality.
In the configuration illustrated in Figure 1, the fuel assemblies 103 are immersed in molten Lead which is heated by the transfer of kinetic energy from the fission fragments. One or more heat exchangers 104 are provided in the enclosure to recover heat from the Lead coolant. The secondary circuit is for example based on steam to operate a turbine. The incident proton beam 105 enters the central target region 101 of the core through a beam window 106 located at the end of a beam channel 107. The layout of the core 100 can generally be as described in WO 95/12203 which also explains the relevant physics.
As in conventional critical reactors, neutrons counters 110 are distributed in the fuel region of the core to continuously obtain neutron count rates indicative of the neutron flux within the core. A control rod system 111 is also provided in the core region in order to adjust the reactivity as described below. Finally, other neutron absorbing rods form a scram absorber system 112 activated to stop the reaction when certain operational conditions are detected.
A control system (not shown) gathers information from various sensors provided in the accelerator complex and the reactor core, including the neutron counters 110, to operate the installation, including the accelerator complex, the control rod system 111 and the a scram absorber system 112. How such control is performed is described further below.

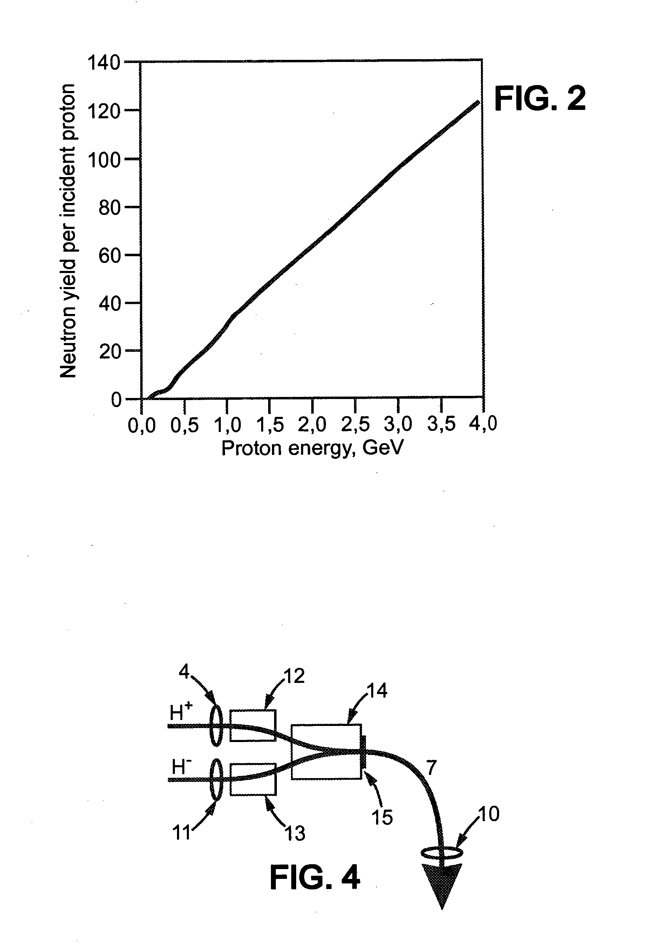

Figure 2 shows a curve representing the average number of spallation neutrons produced by a single incoming proton in the illustrative case of a thick target made of molten Lead, as a function of the proton energy.

A number of state of the art choices are available for the accelerator. The continuous proton intensity can be varied promptly and within wide limits, down to zero if desired, with the help of a control grid in the proton source.

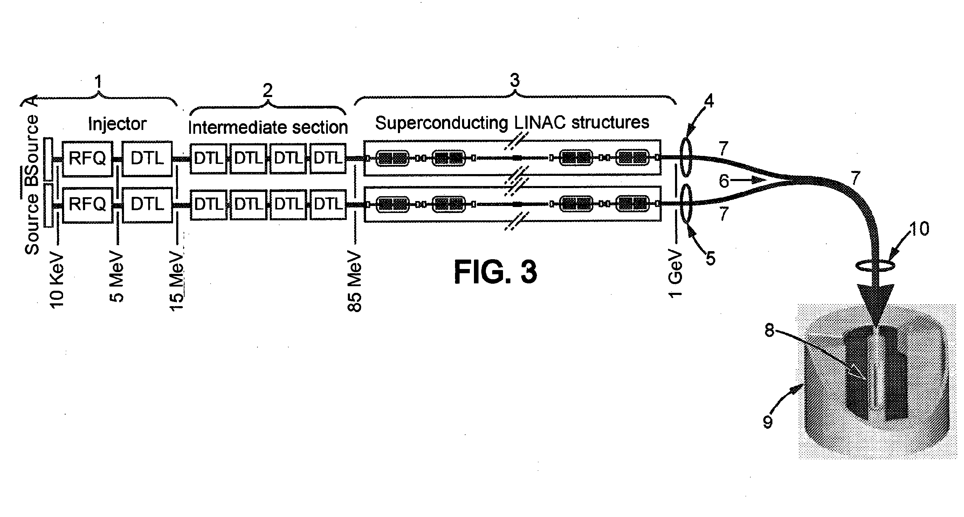

For indicative purposes, the case of a 1 GeV superconducting LINAC with duplicate redundant unit is described schematically in Figure 3. It will be appreciated that alternative accelerating methods of an equivalent performance can be chosen. The accelerator system shown in Figure 3 is of a well-established design. It may be divided into three main segments:

- an injector 1, made out of a source providing protons in an energy range around 10 keV, a radiofrequency quadrupole (RFQ) accelerating the protons up to about 5 MeV, followed by a Drift Tube Linac (DTL), up to a proton energy of indicatively 15 MeV;
- an intermediate section 2, with a DTL structure, either normal or superconducting, to accelerate protons until about 85 MeV;
- and finally a superconducting LINAC structure 3 which completes the accelerating process up to the prescribed energy (1 GeV in our illustrative example).

A preferred feature of the otherwise conventional accelerating structure is the requirement of a very small rate of accidental "trips" due to beam failures. Two methods are presented below, respectively based on an appropriate redundancy of the active components and an appropriate duplication of the accelerating structures.

Redundancy can be realized for every active component of the accelerator. Each accelerating cavity has a RF synchronous phase angle $\varphi_s$ around which during acceleration individual particles perform longitudinal phase space oscillations. The accidental loss of the RF in one (or maybe more) cavities will maintain the accelerated beam current provided there is sufficient spare RF voltage in order to let the other cavities redistribute spontaneously their required increments of the voltage gain with a correspondingly larger $\sin(\varphi_s)$.

Duplication consists in the doubling of the complete accelerating structures from the source to the final energy, with two (or maybe more) and totally independent channels, housed in two nearby but separately shielded enclosures. This permits, if needed, the controlled (repair) access to one of the structures when the other one is operating, as shown in Figure 3. Each independent accelerating channel is capable of providing the total required current $i_{beam}$, although each of them may be normally controlled to operate for instance at $i_{beam}/2$. The two accelerated proton currents are accurately and continuously measured with independent current transformers, 4 and 5. In the event of an accidental failure ("trip") of one of the structures, the full current $i_{beam}$ is taken over in a negligibly short time (of the order of $\mu$s) by the other already operating structure. According to well known practice, at the end of the accelerators the two beam transports are merged together side to side for instance with an appropriate magnetic septum 6 and transferred with the help of the common bending and focusing magnetic transport structure 7 to the spallation target 101 inside the subcritical reactor core 100. The sum of the beam currents is measured at all times by a dedicated, redundant current transformer 10.

In an alternative scenario, one of the accelerators is operating with negative ions $H^- \equiv H^0 e^- \equiv (pe^-)e^-$, and the other one still with protons $H^+$. The two beams with opposite signs are brought magnetically together and a very thin stripping foil is removing the electrons, namely $e^-$, thus producing a uniquely merged proton beam. As shown in Figure 4 while the proton beam is measured by the current transformer 4, another current transformer 11 measures the negative ion current. The two beams are brought together with the help of two separate bending magnets 12, 13 and a common magnet 14. The negative beam is stripped with a thin foil 15 and the resulting proton beam is transported to the spallation target with the help of the (redundant) sum current transformer 10.

Similar considerations based on redundancy and duplication apply to any other alternative accelerating method, like for instance the alternative of the cyclotron.

According to the present invention, three main components inside the reactor provide for the processes necessary to control and adjust the accelerator-driven subcritical core, operated by the extracted proton beam current. They are:

- the scram absorber system 112 to perform a prompt EA shutdown quickly in case of failure of the accelerator current and in particular in the case of an accidental "trip" of the proton beam. This is actuated promptly by inserting fast neutron-absorbing "scram rods" into the core in order to bring down the value of neutron multiplication coefficient k to a safe value. This shutdown should be performed early enough (i.e. of the order of one second) in order to minimize the consequences of the temperature variations especially in the fuel pins or other equivalent structure of the core;
- the uniformly distributed array of neutron sensitive counters 110. Following well-known practice, this kind of counters are only sensitive to neutrons and do not record appreciably other signals, like for instance $\alpha$, $\beta$, $\gamma$ radiation or other ionizing particles. The N counters of the array are arranged uniformly inside the core in order to record the neutron

counting rates $dC_i/dt$, $i = 1, ..., N$. With the fission process being the dominant power-generating process, the appropriately weighted sum of the combined neutron counting rates $\sum_{1}^{N} dC_i/dt$ is directly proportional to the instantaneously produced thermal power of the core. Therefore the rather indirect measurement of the actual instantaneous power can be substituted at all times by a measurement of the *in situ* counter array. A high level of redundancy is recommended in the combined neutron counting rates: this is normally performed with agreement for instance between two out of three duplicated channel arrays.

- the control rod system 111 which provides an appropriate number of neutron-absorbing devices distributed over the volume of the reactor core (control rods) in order to introduce, with the help of fine mechanical movements, the required changes of the neutron multiplication coefficient k.

The last two items closely resemble the ones of an ordinary critical reactor, although their applicability is quite different since here they are intended for the operation of a subcritical reactor, aided by the nuclear fission energy coming from the external neutron source supplied by a suitable particle accelerator.

Several different and complementary procedures can be performed with the help of the above-mentioned systems. Combining these procedures provides for measurements useful for the operation and control of the accelerator-driven subcritical core. ,

A first and continuously running procedure relates to the stable operation of the subcritical reactor. Extensive experience with critical reactors, which is readily extended to the subcritical operation driven by an external spallation source, has shown that reactors may normally run in steady conditions at a constant power for several hours without the necessity of changes in the position of the control elements. Causes and effects of deviations from the steady state behavior can be either momentary or extended because of some change in the system temperature, proton current, coolant flow or load and so on. They may develop slowly over a long period of time because for instance of the fuel burn-up and accumulation of fission products in it. If the reactor power is to be held constant, some means of compensating for changes of the k value are necessary. Compensation for these changes is often self-regulated by the reactor itself.

In these normal conditions, the proton accelerator current is kept at its nominal value and the neutron counting rate $dC/dt$ is continuously recorded as a function of time, in order to alert for its possible variations. It is generally expected that the combined neutron counting rate (and hence the thermal fission produced power $P_{therm}$) will remain very close to a the pre-assigned value, without significant changes in the position of the control elements, which may be however slightly adjusted whenever necessary with the help of the small mechanical movements of the neutron-absorbing control rods. In particular, the contributions to k coming from the temperature variations in the core 100 should remain nearly constant as long as the system temperature, coolant flow or load remain sufficiently stable in order to be automatically regulated by the control rods of the reactor.

Whenever a significant change of the neutron counting rate occurs, or periodically, a phase of estimating reactivity in the core is performed following an adequate procedure described below, with the main aim of restoring the prescribed conditions and ensuring that the neutron multiplication coefficient is safely away from criticality under any circumstance.

It is necessary to activate controlled changes of the proton current, for instance in order to turn on or off the reactor power or to adjust it to the level required for electricity generation. A rare but inevitable event is the total loss of the proton current. Switching on or off the full proton beam systematically even for a very short time (even milliseconds) is to be considered an exceptional event which however must be very carefully considered.

Even for a few seconds, any change in the proton current will imply corresponding changes in the temperature of the fuel of the core and therefore changes in the average temperature coefficient $\langle \Delta k_T \rangle = \langle dk/dT \rangle$, suitably averaged over the reactor volume, in the void coefficient of the coolant $dk/(dp/p)$ and in the expansion of the structure of the core. The different characteristic time constants of these phenomena due to thermal changes must be experimentally identified and separated out from the effects due to the delayed multiplication coefficient $k_d$.

In order to describe a variation in the proton current, we decompose the effect into a component of the proton current that is remaining constant and a (smaller) amplitude which is changing as a step function.

A sudden switching off of the entire beam current would in fact cause a major temperature variation of most if not all the components of the reactor, especially of the fuel material inside the rods. Thus, it should be discouraged as a routine action. On the other hand, in view of the high rate and the consequent high statistical precision of the neutron counters, even a relatively small change of the counting rate can be precisely evaluated.

After a prompt stepwise change of the proton beam current, we can identify, in the neutron counting rate as measured, contributions of the neutron multiplication coefficient k due to (A) the prompt fission neutrons kp, (B) the delayed neutrons $k_d$, generated by the fission fragments and (C) the variations due to the effects of the temperature

$k_{temp}$. Each one of the three effects has its own specific time dependence which is discussed below.

(A) The fast component of the nuclear cascade will be quickly switched off by the indicated step function of the proton current. According to the point reactor kinetics model, valid to a first approximation for kp near 1, the decay of the neutron population is characterized by a fast exponential decay with a time constant $\alpha = (1-k_p)/\Lambda$ where kp is the prompt neutron multiplication coefficient and $\Lambda \approx 1\ \mu s$ is the mean prompt lifetime. Hence the measurement of $\alpha$ can be used to infer kp provided A is known and $\alpha$ is constant. In reality, the value of $\alpha$ strongly deviates from being constant since it reflects the presence of the time-ordered neutron lethargy as a function of the neutron energy and the complicated cross-sections as a function of the neutron energy. Evaluating this very fast change has been already proposed to determine the prompt multiplication coefficient from the experimental observation of the time variation of the parameter $\alpha$ by the so-called kp-method (see A. Billebaud et al. "Prompt multiplication factor measurements in subcritical systems: From MUSE experiment to a demonstration ADS", Progress in Nuclear Energy, 49 (2007), pp. 142-160). It requires that A is known *a priori* from a variety of different kp values, for instance with the help of Monte Carlo calculation provided the actual fuel composition is introduced. In addition, since the transition is very fast, occurring within less than 1 ms, a huge counting rate dC/dt is necessary in order to determine with sufficient statistical accuracy the decay distribution in this short time. This method is not considered as immediately applicable to our case.

(B) The effects of delayed neutrons, generated by the fission fragments are considered next. To this effect, the observation of the counting rate R = dC/dt is continued for some time, typically a few seconds, until a semi-stable level is reached characterized by the survival and subsequent decay of the delayed neutrons. Let R0 + RB be the rate prior to the step change of the proton beam, where R0 is the contribution to the neutron counting rate associated with the fraction of the beam which is cancelled by the step function and RB the rate due to the unchanged beam component. Let R1 be the surviving contribution of R0 due to the semi-stable level of the delayed neutrons. Note that the delayed neutrons (like the spallation neutrons) are also multiplied by the neutron multiplication coefficient k. The resulting reactivity $\rho/\beta_{eff}$ in units of $, where p = (k - 1)/k, can be evaluated using:

$$R1 = \frac{R0}{1 - \rho / \beta_{eff}} \qquad (1)$$

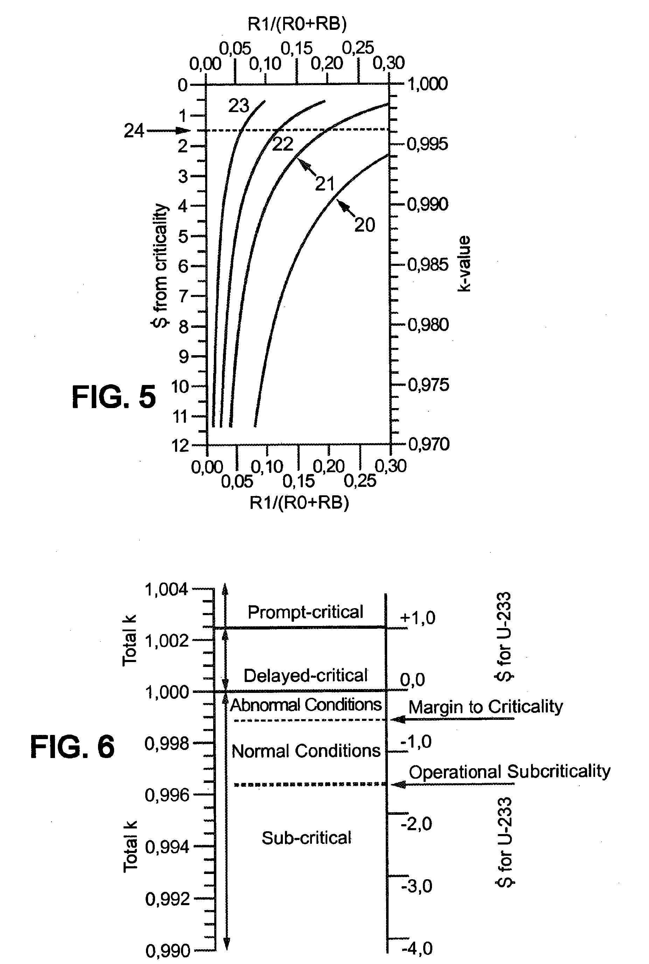

Figure 5 represents the contribution of the surviving delayed neutron rate immediately after a step reduction of the proton current $\Delta i/i$ equal to 1, 0.5, 0.3 and 0.15, as a function of the number of $ away from delayed criticality. When approaching smaller values of $, the effect of the surviving delayed neutron rate is progressively increased.

In a case using U-233 as the fissile isotope, Figure 5 shows in the abscissa the contribution R1/(R0+RB) due to the semi-stable (initial) level of the delayed neutrons, and in the ordinate the k-value both in size and in $ from (delayed) criticality. Four curves 20, 21, 22 and 23 are shown, corresponding to $\Delta i_{beam}/i_{beam}$ = R0/(R0+RB) = 1, 0.5, 0.3 and 0.15, respectively, namely decreasing values of the step in the proton beam, where $\Delta i_{beam}$ is the magnitude of the step change of the beam current, and $i_{beam}$ the value of the beam current just before the step change. As previously, R0 is the fraction of the initial proton beam which undergoes the step function to zero, and RB the fraction due to the unchanged beam component. The k-value corresponding to 1.5 $ from (delayed) criticality is shown by the dashed line 24.

As shown in Figure 5, with k approaching 1, the relative contribution due to the delayed neutrons is growing in size. For instance, for (1 - k) = 1.5 $, the fractional delayed neutron semi-stable plateau is R1/(R0+RB) = 0.12 for $\Delta i_{beam}/i_{beam}$ = 0.3, increasing for $\Delta i_{beam}/i_{beam}$ = 0.5 to R1/(R0+RB) = 0.20 and decreasing for $\Delta i_{bean}/i_{beam}$ = 0.15 to R1/(R0+RB) = 0.06. The signal R1/(R0+RB) = (0.120 $\pm$ 0.005) will give an uncertainty in (1 - k) = (1.5 $\pm$ 0.1) $.

It appears from Figure 5 that the sensitivity to the effect due to the semi-stable (initial) level of the delayed neutrons is much less significant for smaller k values. For instance, in a traditional subcritical system with k = 0.975 and again $\Delta i_{beam}/i_{beam}$ = 0.3, the delayed neutron signal will be much smaller, i.e. R1/(R0+RB) = (0.0259 $\pm$ 0.005), leading to a much higher uncertainty on the neutron multiplication coefficient with a rather large measured uncertainty in the energy gain, $G = 96^{+26}_{-17}$.

From Figure 5, it can be determined that the value of the effective neutron multiplication factor should be in a range above 0.98 (and below 1 to remain subcritical of course), and preferably in a range above 0.99 and below 0.999. An operational diagram as shown in Figure 6 can be derived. Any value k $\geq$ 1 (or p > 0) must be avoided to prevent criticality, with k > 0.98 or 0.99 to ensure sufficient sensitivity to monitor the reactivity p. In the case of Figure 6, we have set a subcriticality value of -1.5 $ for operation of the reactor, corresponding to line 24 in Figure 5 (k $\approx$ 0.9965 in the case of U-233). As long as p remains below -0.5 $ (k $\leq\approx$ 0.999), the operating conditions are not abnormal.

The operational range of the reactor may also be defined in terms of dollars, i.e. reactivity values (like conventional critical reactors). This is convenient since the dollar values are actually monitored and the translation to k-values depends on the specific kind of fissile isotope(s) being used in the core. Based on Figures 5 and 6, the range for p is advantageously above -4.0 $, and a typical range will be between -3.0 and -0.5 $.

(C) Finally, the effects due to the temperature variations are discussed. As already pointed, out any (sudden) variation in the proton current will cause variations of the fuel temperature and consequently a variation of the neutron multiplication coefficient k. These variations are dependent on the actual structure of the subcritical reactor and they may vary substantially according to the situation. Most of the scenarios considered so far are characterized by a small and negative overall temperature coefficient. A reduction, or the total loss, of the proton beam will then produce an increase of the neutron multiplication coefficient k, which obviously must not bring the reactor critical, not even delayed-critical.

The effects due to a change of the reactor power are strongly dependent on the actual composition and age of the fuel. They are primarily dependent on two parameters: the thermal conductivity $k_{th}$ and the thermal capacitance $c_{th}$ of the fuel elements. Large temperature variations are expected for conventional pin-structured Oxide fuels rods since $k_{th}$ is relatively low. On the other hand, metal fuel rods have much smaller temperature variations because of high $k_{th}$. Other fuels, like Carbides or Nitrides are presumably intermediate values between the case of Oxide and the one of metal.

At each (sudden) change of the fission power, a variation of the fuel temperature is occurring due to the progressive change of the heat stored by $c_{th}$ and its dissipation to the remainder of the structures through $k_{th}$. The change in temperature in turn is affecting the value of the neutron multiplication coefficient k. It is noted that $k_{th}$ will generally decrease very substantially during the natural evolution of the fuel, since it depends on its structural properties, deteriorating with increasing burn-up.

For illustration purposes, we have considered a large, Lead-cooled subcritical Energy Amplifier of 1.6 GWatt$_{th}$ and about 50 tons of Thorium Uranium MOX fuel, in the form of standard fuel pins. The Doppler effect, averaged over the whole core, is found to be small and negative, $\langle \Delta k_T \rangle \approx -0.8 \times 10^{-5}K^{-1}$. The main temperature effect is due to the fast change in the temperature of the fuel rods, the coolant and the rest of the core having a much smaller effect and generally a much longer time constant. Its time response for a sudden current variation is easily calculated with the help a second order differential equation integrated over the fuel rods and the appropriate compositions. It is well represented by an exponential with a time constant $\tau_{th}$ much shorter than the characteristic time of the delayed neutrons. Representative values are $\tau_{th}$ = 1.38 s for the initial Thorium Uranium MOX fuel and $\tau_{th}$ = 3.94 s after a 20% mass burn-up, with an increase of a factor 2.8 from 143°C to 386.9°C in the maximum temperature variation of the centre of the fuel pins with respect to the temperature of the coolant. In conclusion, the temperature time response to the neutron multiplication coefficient k is a quantity which should be experimentally measured and periodically monitored during the operation of the sub-critical reactor.

Having in mind the above-mentioned effects (A), (B) and (C) due to a stepwise change of the proton current, several alternatives are next considered.

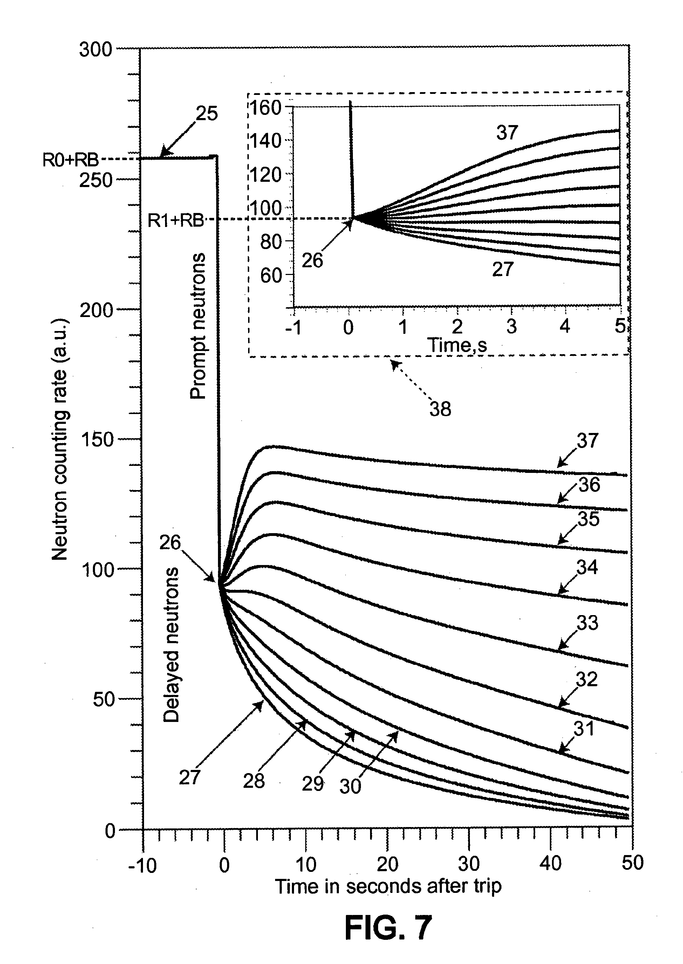

In Figure 7, the event of an inevitable, although rare, beam "trip", namely a step change bringing the whole proton current promptly to zero at time t = 0, is illustrated. The average neutron counting rate R = dC/dt is decaying from an initial value R0+RB shown at 25 for t < 0 to the semi-stable plateau 26 at t ≈ 0 due to the delayed neutrons, following the curve 20 of Figure 5 and exemplified in our case by a value of k which is set to be 1.5 $ away from criticality (level 24 in Figure 5).

The reactor temperature will then spontaneously decay, in absence of interventions, causing variations of the neutron counting rate for instance along one of the families of curves as shown in Figure 7. The value chosen is $\tau_{th}$ = 4 s, corresponding to the worst case of a 20% mass burn-up for the above-exemplified Thorium Uranium MOX fuel. The various curves 27 through 37 represent a fuel-averaged peak fuel core temperature change $\Delta T_{max}$ of 0°C, 100°C, 200°C, 300°C, 400°C, 500°C, 600°C, 700°C, 800°C, 900°C and 1000°C, respectively. One can see that while for small $\Delta T_{max}$ (27), the counting rate is following the one of the delayed neutrons, as soon as $\Delta T_{max}$ becomes significant, the neutron counting rate is strongly influenced by the changes of k. The estimated value for the previous example after a 20% mass burn-up is near curve 31. The recorded neutron rate remains stable well above the estimated initial $\Delta T_{max}$. With increasing $\Delta T_{max}$, the neutron counting rate, here due exclusively to the delayed neutrons is extending to longer times, approaching a near constant value when approaching the criticality value, which however is excluded since the delayed neutrons alone will be able to maintain a high temperature in the fuel core.

In the insert 38 of Figure 7, we show in more detail the first 5 seconds after the "trip". With adequate statistics, it is possible to smoothly extrapolate with remarkable accuracy the value R1+RB of the semi-stable plateau 26 at t ≈ 0. The value of the delayed neutron multiplication k is then extracted with the help of Figure 5.

The reactivity in $ can also be determined from (1):

$$\frac{\rho}{\beta_{eff}} = \frac{1-X}{1-X-\Delta i_{beam}/i_{beam}} \qquad (2)$$

where $X = \dfrac{R1+RB}{R0+RB}$ s the ratio of the level R1+RB of the semi-stable plateau 26 at t ≈ 0 to the level R0+RB of the neutron counting rate 25 at t < 0, as indicated in Figure 7 (in the case of Figure 7, we have $\Delta i_{beam} = i_{beam}$, so RB = 0). Clearly, rather than computing $\rho/\beta_{eff}$ for a given current drop $\Delta i_{beam}/i_{beam}$ and comparing it to a target value or range, it is possible to just compute the related ratio X from the output of the neutron counters and to express the target value or range in terms of X-value. R0+RB is directly measured as the stable counting rate prior to the step change of the beam current. Since this rate is stable, there is ample time to get sufficient statistics to measure it reliably. The value R1+RB represents the actual counting rate for only a very short period of time, of the order of a few tens of milliseconds, as can be seen in the insert 38. In practice, the counters 110 may not accumulate enough neutron detection events to provide a reliable measurement in such a short period. However, we can exploit the measured neutron counting rate for a relatively longer time period, more than 100 milliseconds, or even more than 1 second, after the step change of the beam current to obtain a reliable value of R1+RB. This is done by extrapolating the values of the neutron counting rate measured after the step change towards t = 0, while the beam current is kept off. Extrapolation can be performed using a variety of well-known numerical methods including least mean squares, curve fitting, etc. At t = 0, the extrapolated value gives R1+RB with a very good accuracy. If needed, the counting statistics can be acquired over several seconds.

Note that curve 27 represents the situation for a negligible temperature effect ($\Delta T_{max} \approx 0°C$) and curve 37 an averaged centre core temperature $\Delta T_{max} = 1000°C$ with respect to the temperature of the coolant. Whatever the temperature scenario, the level R1+RB of the semi-stable plateau 26 at t ≈ 0 is safely estimated.

In reality, the time dependence of the fission rate after a "trip" may have a dependence which is more complex that the one of the simple exponential analysis here illustrated and that in particular the value of $\tau_{th}$ may be different from these elementary expectations. Notwithstanding, the value R1+RB at point 26 can be accurately estimated by analytic "continuity" extrapolation along the procedure indicated in the insert 38.

A "trip" event having consequences as depicted in Figure 7 in terms of neutron population is detected using the current transformers 4, 5, 10 of the accelerator complex. A few seconds after detection, it is automatically aborted by the prompt insertion of the fast moving "scram" absorber elements 112 with the corresponding large reactivity reduction bringing the fission power down to near zero. However, the present analysis shows that even a failure of the scram system is not causing irreparable damage. Also, before the scram system is activated, it is possible to obtain an estimation of the reactivity p (in $) immediately before the beam trip using the estimation procedure described above with reference to Figure 7.

Other phases of estimating reactivity in the core 100 are used during the normal life of the ADS, in order to monitor the reactivity, or the neutron multiplication coefficient, to make sure that it is in the required range and take any corrective measures using the control rod system 111.

Preferably, such phases do not include a complete shutdown of the beam current which, if repeated, may represent a risk for the thermomechanical stability of the core. Referring to Figure 5, it can be determined that a step reduction of the beam current $i_{beam}$ by less than 50% is suitable.

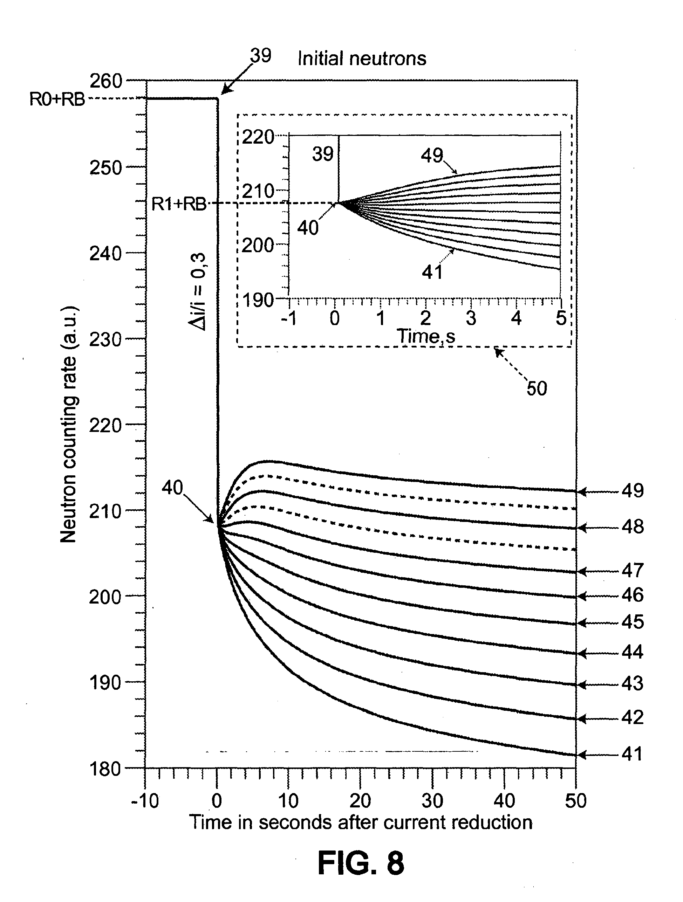

Figure 8 is a diagram similar to the one of Figure 7 in an example where $\Delta i_{beam}/i_{beam} = 0.3$. Again, the behavior of (A) the fast component, (B) the delayed component and (C) the temperature variations as a function of time has been taken into account. The neutron counting rate was simulated as a function of time following the step change of the beam current by -30%. After a few seconds, the current was returned back to its original value $i_{beam}$. An initial k-value corresponding to 1.5 $ below delayed criticality and $\tau_{th}$ = 4 s were chosen as further parameters. The neutron signal R0+RB at 39 is reduced to R1+RB at 40, maintaining the full initial contribution due to the delayed neutrons. The various curves 41 through 49 represent a fuel averaged peak fuel core temperature change $\Delta T_{max}$ of 0°C, 40°C, 80°C, 120°C, 160°C, 200°C, 240°C, 320°C and 400°C, respectively. As expected, as soon as $\Delta T_{max}$ becomes significant, the neutron counting rate is strongly influenced by the changes of k. The estimated value for the previous example after a 20% mass burn-up is near the curve 43. In the insert 50 of Figure 8, the first 5 seconds following the step change are shown in more detail. Again, it is seen that with an adequate statistics, it is possible to smoothly extrapolate with remarkable accuracy the value R1+RB of the semi-stable plateau 40 at t ≈ 0. The value of the neutron multiplication k is then extracted with the help of Figure 5 and curve 22. The reactivity $\rho/\beta_{eff}$ can also be estimated using (2).

The above-described procedure of progressive changes of the accelerator current can be extended during the whole operation of the sub-critical reactor both with negative or positive $\Delta i_{beam}$ as required. At each step, the neutron counting rate dC/dt and the corresponding fission-produced power are continuously recorded as a function of time and the new value of the multiplication coefficient k, or dollar value, is calculated. Since the temperature of the fuel is rising with the produced power, the k-value is changing significantly. At each step, control rods are to be moved in order to maintain the required value of k throughout the process.

Some organized changes of the reactor performance must occasionally take place, including a start-up or shut-down process or a process of varying the reactor power for any reason. The accelerator current is then progressively brought to a required value in a series of several successive increment or decrement steps. Following such step changes of the beam current, the resulting neutron counting rate is accurately measured with a procedure analogue to that described above with reference to Figure 7 or 8: the value for t > 0 is extrapolated smoothly towards t = 0 from the right side of the curve to extract the value of the semi-stable plateau related to the prompt and delayed neutron components, removing the progressively growing effects of temperature variations. From this extrapolated value divided by the corresponding value for t ≤ 0, one can calculate k in units of $. At each step, the control rods are progressively adjusted, in order to maintain as required the conditions of the nuclear power production setup. The procedure may be optionally repeated in order to optimize the required performance of the reactor.

It will be appreciated that the embodiments described above is an illustration of the invention disclosed herein and that various modifications can be made without departing from the scope as defined in the appended claims.

## Claims

1. A method of operating in subcritical conditions an accelerator-driven nuclear system, comprising:

   - directing accelerated particles onto a spallation target (101);
   - multiplying neutrons from the spallation target in a core (100) loaded with nuclear fuel comprising fissile and fertile material, neutron counters (110) being distributed in the core; and
   - controlling reactivity in the core such that an effective neutron multiplication coefficient is maintained in a range above 0.98,

   wherein controlling reactivity in the core comprises:

   - applying a step change to reduce the beam current of the accelerated particles;
   - measuring a variation of a neutron counting rate provided by the neutron counters in response to the step change of the beam current;
   - estimating a drop of the counting rate related to the loss of prompt neutrons due to said step change, wherein estimating the drop of the neutron counting rate comprises extrapolating the variation of the counting rate after the step change towards the time of the step change; and
   - evaluating a ratio of the estimated drop of the counting rate to a value of the counting rate before said step change.

2. The method as claimed in claim 1, wherein said range for the effective neutron multiplication coefficient is above 0.99 and below 0.999.

3. The method as claimed in claim 1, wherein reactivity in the core (100) is controlled in a range above -4$, where the reactivity unit '$' is for the reactor system.

4. The method as claimed in claim 3, wherein reactivity in the core (100) is controlled in a range between -3$ and -0.5$.

5. The method as claimed in any one of the preceding claims, wherein a period following the step change, in which the beam current is kept at the reduced value and the variation of the neutron counting rate is measured for extrapolation, is more than 100 milliseconds, preferably more than 1 second.

6. The method as claimed in any one of the preceding claims, wherein the step change reduces the beam current by less than 50%.

7. The method as claimed in any one of the preceding claims, wherein the accelerated particles directed onto the spallation target (101) are in the form of a continuous particle beam (105).

8. The method as claimed in claim 7, wherein the particle beam (105) is operated at a nominal beam current except in phases of estimating reactivity in the core (100), and wherein the reactivity control comprises adjusting the position of neutron-absorbing control elements in the core.

9. The method as claimed in claim 7 or 8, wherein the particle beam (105) is operated at a nominal beam current except in phases of estimating reactivity in the core (100), and wherein the reactivity control comprises:

- continuously monitoring a neutron counting rate provided by the neutron counters (110); and
- in response to detection of a deviation condition of the monitored counting rate, performing a phase of estimating reactivity in the core.

10. The method as claimed in any one of the preceding claims, wherein the reactivity control comprises periodically estimating reactivity in the core (100), preferably with a periodicity of more than an hour, the estimation of reactivity comprising reducing a current of the accelerated particles.

11. The method as claimed in any one of the preceding claims, further comprising:

- detecting any interruption of the accelerated particles; and
- in response to detection of an interruption, inserting scram neutron absorbers into the core (100).

12. The method as claimed in claim 11, wherein the scram neutron absorbers are inserted into the core (100) after a period of more than 100 milliseconds, preferably more than 1 second, following detection of an interruption of the accelerated particles, wherein a variation of a neutron counting rate provided by the neutron counters (110) is measured in said period, wherein a drop of the counting rate related to the loss of prompt neutrons due to said interruption is estimated and wherein a ratio of the estimated drop of the counting rate to a value of the counting rate before said interruption is evaluated to derive a reactivity value.

13. The method as claimed in any one of the preceding claims, wherein the accelerated particles are provided by an accelerator complex having redundant components to ensure continuity of the beam current.

14. A subcritical accelerator-driven nuclear system, comprising:

- at least one particle accelerator (1-3);
- a spallation target (101) receiving the accelerated particles;
- a core (100) adjacent to the spallation target, loaded with nuclear fuel comprising fissile and fertile material;
- a coolant circuit for recovering heat from the core;
- neutron counters (110) distributed in the core; and
- a control system cooperating with the neutron counters for controlling reactivity such that an effective neutron multiplication coefficient is maintained in a range above 0.98,

wherein the control system is arranged for applying a step change to reduce the beam current of the accelerated particles, for measuring a variation of a neutron counting rate provided by the neutron counters in response to the step change of the beam current, for estimating a drop of the counting rate related to the loss of prompt neutrons due to said step change wherein estimating the drop of the neutron counting rate comprises extrapolating the variation of the counting rate after the step change towards the time of the step change, and for evaluating a ratio of the estimated drop of the counting rate to a value of the counting rate before said step change.

**Patentansprüche**

1. Verfahren zum Betrieb eines durch Beschleuniger angetriebenen bzw. unterstützten Nuklearsystems, wobei das Verfahren aufweist:

- Lenken von beschleunigten Teilchen auf ein Spallationstarget (101);
- Vervielfachung von Neutronen von dem Spallationstarget in einem Kern (100), der mit Kernbrennstoff beladen ist, das Spalt- und Brutmaterial aufweist, wobei in dem Kern Neutronenzähler (100) verteilt sind; und
- Steuern der Reaktivität in dem Kern, so dass ein effektiver Neutronenvervielfachungskoeffizient in einem Bereich oberhalb 0,98 gehalten wird,

wobei das Steuern der Reaktivität in dem Kern aufweist:

- Anwenden einer schrittweisen Änderung, um den Strahlstrom der beschleunigten Teilchen zu reduzieren;
- Messen einer Veränderung einer Neutronenzählrate durch die Neutronenzähler als Reaktion auf die schrittweise Änderung des Strahlstroms;
- Schätzen eines Abfalls der Zählrate, der mit dem Verlust an prompten Neutronen infolge der schrittweisen Änderung verbunden ist, wobei das Schätzen des Abfalls der Neutronenzählrate das Extrapolieren der Veränderung der Zählrate nach der schrittweisen Änderung zum Zeitpunkt der schrittweisen Änderung hin aufweist; und
- Auswerten eines Verhältnisses des geschätzten Abfalls der Zählrate zu einem Wert der Zählrate vor der schrittweisen Änderung.

2. Verfahren nach Anspruch 1, wobei der Bereich für den effektiven Neutronenvervielfachungskoeffizienten oberhalb 0,99 und unterhalb 0,999 liegt.

3. Verfahren nach Anspruch 1, wobei die Reaktivität in dem Kern (100) in einem Bereich oberhalb -4$ gesteuert wird, wobei "$" die Reaktivitätseinheit für die Reaktoranlage ist.

4. Verfahren nach Anspruch 3, wobei die Reaktivität in dem Kern (100) in einem Bereich zwischen -3$ und -0,5$ gesteuert wird.

5. Verfahren nach einem der vorstehenden Absprüche, wobei
eine Zeitspanne nach der schrittweisen Änderung, in welcher der Strahlstrom auf dem reduzierten Wert gehalten und die Änderung der Neutronenzählrate zur Exptrapolation gemessen wird, mehr als 100 Millisekunden, vorzugsweise mehr als eine Sekunde beträgt.

6. Verfahren nach einem der vorstehenden Ansprüche, wobei die schrittweise Änderung den Strahlstrom um weniger als 50% reduziert.

7. Verfahren nach einem der vorstehenden Ansprüche, wobei die auf das Spallationstarget (101) gelenkten beschleunigten Teilchen die Form eines kontinuierlichen Teilchenstrahls (105) haben.

8. Verfahren nach Anspruch 7, wobei der Teilchenstrahl (105) mit einem Nennstrahlstrom betrieben wird, außer in Phasen zum Schätzen der Reaktivität in dem Kern (100), und wobei die Reaktivitätssteuerung das Einstellen der Position von neutronenabsorbierenden Steuerelementen im Kern aufweist.

9. Verfahren nach Anspruch 7 oder 8, wobei der Teilchenstrahl (105) mit einem Nennstrahlstrom betrieben wird, außer in Phasen der Reaktivitätsschätzung im Kern (100), und wobei die Reaktivitätssteuerung aufweist:

- kontinuierliches Überwachen einer durch die Neutronenzähler (110) gelieferten Neutronenzählrate; und
- als Reaktion auf die Detektion eines Abweichungszustands der überwachten Zählrate Durchführen einer Phase zum Schätzen der Reaktivität im Kern.

10. Verfahren nach einem der vorstehenden Ansprüche, wobei die Reaktivitätssteuerung das periodische Schätzen der Reaktivität im Kern (100) aufweist, vorzugsweise mit einer Periodizität von mehr als einer Stunde, wobei das Schätzen der Reaktivität das Reduzieren eines Stroms beschleunigter Teilchen aufweist.

11. Verfahren nach einem der vorstehenden Ansprüche, das ferner aufweist:

- Detektion jeder Unterbrechung der beschleunigten Teilchen; und
- als Reaktion auf die Detektion einer Unterbrechung Einfahren von Neutronenabsorbern zur Schnellabschaltung in den Kern (100).

12. Verfahren nach Anspruch 11, wobei die Neutronenabsorber zur Schnellabschaltung nach einer Zeitspanne von mehr als 100 Millisekunden, vorzugsweise mehr als 1 Sekunde, nach Detektion einer Unterbrechung der beschleunigten Teilchen in den Kern (100) eingefahren werden, wobei eine Änderung einer durch die Neutronenzähler (110) gelieferten Neutronenzählrate in der Zeitspanne gemessen wird, wobei ein mit dem Verlust an prompten Neutronen infolge der Unterbrechung verbundener Abfall der Zählrate geschätzt wird, und wobei ein Verhältnis des geschätzten Abfalls der Zählrate zu einem Wert der Zählrate vor der Unterbrechung ausgewertet wird, um einen Reaktivitätswert abzuleiten.

**13.** Verfahren nach einem der vorstehenden Ansprüche, wobei die beschleunigten Teilchen durch einen Beschleunigerkomplex mit redundanten Komponenten bereitgestellt werden, um die Kontinuität des Strahlstroms sicherzustellen.

**14.** Unterkritisches, durch Beschleuniger angetriebenes Nuklearsystem, das aufweist:

- mindestens einen Teilchenbeschleuniger (1-3);
- ein Spallationstarget (101), das die beschleunigten Teilchen empfängt;
- einen dem Spallationstarget benachbarten Kern (100), der mit Kernbrennstoff beladen wird, das Spalt- und Brutmaterial aufweist;
- einen Kühlkreislauf zur Rückgewinnung von Wärme aus dem Kern;
- im Kern verteilte Neutronenzähler (110); und
- ein Steuersystem, das mit den Neutronenzählern zusammenwirkt, um die Reaktivität so zu steuern, dass ein effektiver Neutronenvervielfachungskoeffizient in einem Bereich oberhalb 0,98 gehalten wird,

wobei das Steuersystem so eingerichtet ist, dass eine schrittweise Änderung angewandt wird, um den Strahlstrom der beschleunigten Teilchen zu reduzieren, eine Änderung einer durch die Neutronenzähler gelieferten Neutronenzählrate als Reaktion auf die schrittweise Änderung des Strahlstroms zu messen, einen mit dem Verlust an prompten Neutronen infolge der schrittweisen Änderung verbundenen Abfall der Zählrate zu schätzen, wobei das Schätzen des Abfalls der Zählrate das Extrapolieren der Zählratenveränderung nach der schrittweisen Änderung zum Zeitpunkt der schrittweisen Änderung hin aufweist, und das Verhältnis des geschätzten Abfalls der Zählrate zu einem Wert der Zählrate vor der schrittweisen Änderung auszuwerten.

**Revendications**

**1.** Procédé pour faire fonctionner dans des conditions sous-critiques un système nucléaire entraîné par accélérateur, comprenant:

- diriger des particules accélérées sur une cible de spallation (101);
- multiplier des neutrons issus de la cible de spallation dans un coeur (100) chargé avec du combustible nucléaire comprenant de la matière fissile et de la matière fertile, des compteurs de neutrons (110) étant répartis dans le coeur; et
- contrôler la réactivité dans le coeur de façon qu'un coefficient de multiplication de neutrons effectif soit maintenu dans une plage au-dessus de 0,98,

dans lequel le contrôle de la réactivité dans le coeur comprend:

- appliquer un changement par palier pour réduire le courant de faisceau des particules accélérées;
- mesurer une variation d'un taux de comptage des neutrons fourni par les compteurs de neutrons en réponse au changement par palier du courant de faisceau;
- estimer une chute du taux de comptage associée à la perte de neutrons instantanés due audit changement par palier, l'estimation de la chute du taux de comptage des neutrons comprenant une extrapolation de la variation du taux de comptage après le changement par palier vers l'instant du changement par palier; et
- évaluer un rapport entre la chute estimée du taux de comptage et une valeur du taux de comptage avant ledit changement par palier.

**2.** Procédé selon la revendication 1, dans lequel ladite plage pour le coefficient de multiplication de neutrons effectif est au-dessus de 0,99 et au-dessous de 0,999.

**3.** Procédé selon la revendication 1, dans lequel la réactivité dans le coeur (100) est contrôlée dans une plage au-dessus de -4$, où l'unité de réactivité « $ » concerne le système de réacteur.

**4.** Procédé selon la revendication 3, dans lequel la réactivité dans le coeur (100) est contrôlée dans une plage située entre -3$ et -0,5$.

**5.** Procédé selon l'une quelconque des revendications précédentes, dans lequel une période suivant le changement par palier, pendant laquelle le courant de faisceau est maintenu à la valeur réduite et la variation du taux de comptage de neutrons est mesurée pour l'extrapolation, est supérieure à 100 millisecondes, de préférence supérieure à 1 seconde.

6. Procédé selon l'une quelconque des revendications précédentes, dans lequel le changement par palier réduit le courant de faisceau de moins de 50 %.

7. Procédé selon l'une quelconque des revendications précédentes, dans lequel les particules accélérées dirigées sur la cible de spallation (101) sont sous la forme d'un faisceau continu de particules (105).

8. Procédé selon la revendication 7, dans lequel le faisceau de particules (105) est mis en oeuvre à un courant de faisceau nominal sauf dans des phases d'estimation de la réactivité dans le coeur (100), et dans lequel le contrôle de la réactivité comprend un réglage de la position d'éléments de contrôle absorbant les neutrons dans le coeur.

9. Procédé selon la revendication 7 ou 8, dans lequel le faisceau de particules (105) est mis en oeuvre à un courant de faisceau nominal sauf dans des phases d'estimation de la réactivité dans le coeur (100), et dans lequel le contrôle de la réactivité comprend :

- surveiller continument un taux de comptage de neutrons fourni par les compteurs de neutrons (110); et
- en réponse à la détection d'une condition de déviation du taux de comptage surveillé, effectuer une phase d'estimation de la réactivité dans le coeur.

10. Procédé selon l'une quelconque des revendications précédentes, dans lequel le contrôle de la réactivité comprend une estimation périodique de la réactivité dans le coeur (100), de préférence avec une périodicité de plus d'une heure, l'estimation de la réactivité comprenant une réduction d'un courant des particules accélérées.

11. Procédé selon l'une quelconque des revendications précédentes, comprenant en outre:

- détecter une interruption éventuelle des particules accélérées; et
- en réponse à la détection d'une interruption, insérer des absorbeurs de neutrons d'arrêt d'urgence dans le coeur (100).

12. Procédé selon la revendication 11, dans lequel les absorbeurs de neutrons d'arrêt d'urgence sont insérés dans le coeur (100) après une période de plus de 100 millisecondes, de préférence de plus de 1 seconde, suivant la détection d'une interruption des particules accélérées, dans lequel une variation d'un taux de comptage de neutrons fourni par les compteurs de neutrons (110) est mesurée dans ladite période, dans lequel une chute du taux de comptage associé à la perte des neutrons instantanés due à ladite interruption est estimée et dans lequel un rapport entre la chute estimée du taux de comptage et une valeur du taux de comptage avant ladite interruption est évalué afin de déduire une valeur de réactivité.

13. Procédé selon l'une quelconque des revendications précédentes, dans lequel les particules accélérées sont fournies par un complexe d'accélérateurs doté de composants redondants pour assurer la continuité du courant de faisceau.

14. Système nucléaire sous-critique entraîné par accélérateur, comprenant :

- au moins un accélérateur de particules (1-3);
- une cible de spallation (101) recevant les particules accélérées;
- un coeur (100) adjacent à la cible de spallation, chargé avec du combustible nucléaire comprenant de la matière fissile et de la matière fertile;
- un circuit de refroidissement pour récupérer de la chaleur provenant du coeur;
- des compteurs de neutrons (110) répartis dans le coeur; et
- un système de contrôle coopérant avec les compteurs de neutrons pour contrôler la réactivité de façon qu'un coefficient de multiplication de neutrons effectif soit maintenu dans une plage au-dessus de 0,98, dans lequel le système de contrôle est agencé pour appliquer un changement par palier afin de réduire le courant de faisceau des particules accélérées, pour mesurer une variation d'un taux de comptage de neutrons fourni par les compteurs de neutrons en réponse au changement par palier du courant de faisceau, pour estimer une chute du taux de comptage associée à la perte des neutrons instantanés due audit changement par palier, l'estimation de la chute du taux de comptage de neutrons comprenant une extrapolation de la variation du taux de comptage après le changement par palier vers l'instant du changement par palier, et pour évaluer un rapport entre la chute estimée du taux de comptage et une valeur du taux de comptage avant ledit changement par palier.

**FIG. 1**

FIG. 2

FIG. 4

**FIG. 3**

EP 2 561 514 B1

FIG. 5

FIG. 6

**FIG. 7**

**FIG. 8**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 9512203 A

- US 2007064859 A1

### Non-patent literature cited in the description

- **C. RUBBIA.** *Energy 2050' Symposium in Stockholm, Sweden,* 19 October 2009
- **P. BAETEN.** Reactivity Monitoring in ADS, Application to the Myrrha ADS Project. *Progress in Nuclear Energy,* 2003, vol. 43 (1-4), 413-419

- **C.M. PERSSON et al.** Analysis of reactivity determination methods in the subcritical experiment Yalina. *Nuclear Instruments and Methods in Physics Research A,* 2005, vol. 554, 374-383
- **A. BILLEBAUD et al.** Prompt multiplication factor measurements in subcritical systems: From MUSE experiment to a demonstration ADS. *Progress in Nuclear Energy,* 2007, vol. 49, 142-160